# EUROPÄISCHE PATENTSCHRIFT

(11) **EP 3 592 593 B1**
(45) Veröffentlichungstag und Bekanntmachung des Hinweises auf die Patenterteilung: **13.01.2021**
(21) Anmeldenummer: 18708582.4
(22) Anmeldetag: 22.02.2018
(51) Int. Cl.: B60K 6/48, B60K 6/40, B60K 6/387, F16C 35/06

(54) **HYBRIDMODULE, ABZIEHWERKZEUG-HYBRIDMODULE-KOMBINATION UND MONTAGE/DEMONTAGEVERFAHREN FÜR HYBRIDMODULE**
HYBRID MODULES, REMOVAL TOOL-HYBRID MULES-COMBINATION AND ASSEMBLY/DISASSEMBLY METHOD FOR HYBRID MODULES
MODULES HYBRIDES, OUTIL D'EXTRACTION-MODULES HYBRIDES-COMBINAISON ET PROCÉDÉ DE MONTAGE/DÉMONTAGE POUR DES MODULES HYBRIDES

(30) Priorität: 06.03.2017 DE 102017104575; 08.12.2017 DE 102017129274
(43) Veröffentlichungstag der Anmeldung: 15.01.2020
(73) Patentinhaber: Schaeffler Technologies AG & Co. KG, 91074 Herzogenaurach (DE)
(72) Erfinder: HOPPE, Marcus, 77855 Achern (DE); PIEPER, Torsten, 76137 Karlsruhe (DE); BEYER, Robin, 77694 Kehl (DE)
(86) Internationale Anmeldenummer: PCT/DE2018/100151
(87) Internationale Veröffentlichungsnummer: WO 2018/161996

(56) Entgegenhaltungen:
- WO-A1-2012/087699
- WO-A2-2015/075365
- DE-A1-102014 213 818
- GB-A- 1 295 591
- TW-U- M 335 589

## Beschreibung

Die vorliegende Erfindung betrifft ein Hybridmodul, insbesondere für ein achsparalleles Hybridsystem, für einen (Hybrid-) Antriebsstrang eines (Hybrid-) Fahrzeugs, wie bspw. ein Pkw, ein Lkw oder ein anderes Nutzfahrzeug, mit einem ersten Antriebsaggregat, wie bspw. einer Verbrennungskraftmaschine, einem zweiten Antriebsaggregat, wie bspw. einer E-Maschine, die über eine Zwischenwelle mit einer Antriebswelle drehmomentübertragend verbindbar sind, wobei ein Drehmoment von dem ersten Antriebsaggregat und/oder dem zweiten Antriebsaggregat über eine Trennkupplung an die Zwischenwelle weitergebbar ist, wobei die Zwischenwelle über eine Stützlagerung mit zumindest einem Stützlager an einem Gehäuse abgestützt ist, und die Trennkupplung über eine Nabe mit der Zwischenwelle verbunden ist.

Hybridmodule sind aus dem Stand der Technik bereits bekannt. Hybridmodule werden bzgl. ihrer Anordnungsstruktur der Antriebsaggregate, üblicherweise ein Verbrennungsmotor und eine E-Maschine, unterschieden. So ist bspw. unter einer P2-Anordnung eine solche Anordnung zu verstehen, bei der die E-Maschine nicht direkt am Verbrennungsmotor verbaut ist, sondern sich am Getriebeeingang mit einer dazwischenliegenden Kupplung befindet. Dadurch ist der Verbrennungsmotor vom restlichen Antriebsstrang abkoppelbar und die elektrische Fahrt sowie die Rekuperation sind in einem wesentlich effizienteren Rahmen, ohne die Einbußen des Schleppmoments des Verbrennungsmotors, möglich. Solche Hybridmodule werden dann auch üblicherweise als P2-Hybridmodule bezeichnet.

Ferner unterscheidet man bei Hybridmodulen zwischen achsparallelen und koaxialen Hybridmodulen. Bei achsparallelen Hybridmodulen sind die Ausgangswellen der beiden Antriebsaggregate, in der Regel ein Verbrennungsmotor und eine E-Maschine, parallel zueinander ausgerichtet. Bei koaxialen Hybridmodulen sind diese Ausgangswellen koaxial, das heißt, zueinander fluchtend, angeordnet. Das bedeutet, sie haben dieselbe Rotationsachse.

Die DE 10 2015 211 436 A1 betrifft eine Antriebsanordnung mit einem Eingangselement zur Verbindung mit einer Verbrennungskraftmaschine und mit einer elektrischen Maschine, und mit einem Ausgangselement zur Verbindung der Antriebsanordnung mit einer Getriebeeingangswelle eines nachgeordneten Getriebes, wobei als Anfahrelement eine Reibungskupplung vorgesehen ist, welche den Rotor der elektrischen Maschine mit dem Ausgangselement koppelt und mit einer Klauenkupplung, welche die Verbrennungskraftmaschine bei geschlossener Reibungskupplung mit dem Eingangselement der Reibungskupplung koppelt, wobei ein Betätigungsmittel für die Reibungskupplung und ein Betätigungsmittel für die Klauenkupplung vorgesehen sind, welche von einem Betätigungselement beaufschlagbar sind, wobei das Betätigungselement in eine erste Betätigungsrichtung verlagerbar ist, um das Betätigungsmittel zur Betätigung der Klauenkupplung zu beaufschlagen und in eine zweite Betätigungsrichtung verlagerbar ist, um das Betätigungsmittel zur Betätigung der Reibungskupplung zu beaufschlagen.

Die DE 10 2009 059 944 A1 offenbart ein Hybridmodul für einen Antriebsstrang eines Fahrzeuges. Das darin offenbarte Hybridmodul weist eine erste Trennkupplung, einen Elektromotor und eine zweite Trennkupplung auf, wobei die erste Trennkupplung im Momentenfluss zwischen einem Verbrennungsmotor im Antriebsstrang und dem Elektromotor und die zweite Trennkupplung im Momentenfluss zwischen Elektromotor und einem Getriebe im Antriebsstrang angeordnet sind, wobei die erste Trennkupplung und die zweite Trennkupplung in einem gemeinsamen Nassraum angeordnet sind.

Aus der WO 2012/087699 A1 ist ein Hybridmodul bekannt, bei welchem der Außenlamellenträger einer Trennkupplung mit einer Nabe auf einer Zwischenwelle angeordnet ist. Der Innenlamellenträger ist über ein Zwischenstück und eine Verzahnung mit der Kurbelwelle verbunden.

Die DE 10 2014 213 818 A1 offenbart eine achsparallele Bereitstellung eines E-Motors eines Hybridmoduls. Der Verbrennungsmotor ist über eine Klauenkupplung zuschaltbar, während der Rotor mit einer Kupplungsdruckplatte verbunden ist.

Jedoch sind insbesondere Montage- bzw. Demontageverfahren sehr komplex und es ist schwierig nur Teile des Hybridmoduls, z.B. bei Versagen, auszutauschen. Daher ist es Aufgabe der Erfindung, die Nachteile aus dem Stand der Technik zu vermeiden oder wenigstens zu mildern, und insbesondere für einzelne Bauteile und Baugruppen eines (P2-) Hybridsystems, insbesondere aber für die KO-Kupplung geeignete Montage- bzw. Demontageschritte aufzuzeigen.

Die Aufgabe der Erfindung wird bei einem gattungsgemäßen Hybridmodul erfindungsgemäß dadurch gelöst, dass die Nabe zumindest eine Vorrichtung aufweist, an der ein Abziehwerkzeug zum Kraftaufbringen form- und/oder kraftschlüssig angreift, um beim Einsatz des Abziehwerkzeugs eine zerstörungsfreie Demontage, d.h. ein Entfernen von der Zwischenwelle, der Nabe und der Trennkupplung zu ermöglichen.

Dadurch ist es möglich, die Kupplung im Reparaturfall auch einzeln ausbauen zu können, ohne das komplette Hybridmodul mit E-Maschinen und Leistungselektronik, Einrücksystem, Gehäuse etc. austauschen zu müssen.

Vorteilhafte Ausführungsformen sind in den Unteransprüchen beansprucht und werden nachfolgend erläutert.

So ist es von Vorteil, wenn die Vorrichtung als eine umlaufende Nut oder als Gewindelöcher ausgebildet ist. Sowohl in die Nut als auch in die Löcher kann ein entsprechendes Abziehwerkzeug eingreifen, um die Nabe von der Zwischenwelle zu trennen.

Erfindungsgemäß ist die Trennkupplung als eine Lamellenkupplung mit einem Außenlamellenträger und einem Innenlamellenträger ausgebildet.

Es ist weiter vorgesehen, dass der Innenlamellenträger in direktem Kontakt mit einem Endloszugmittel ist. Dadurch kann ein Drehmoment von der E-Maschine auf die Kupplung übertragen werden.

Ferner betrifft die Erfindung auch eine Abziehwerkzeug-Hybridmodul-Kombination, aus dem erfindungsgemäßen Hybridmodul und einem Abziehwerkzeug, wobei das Abziehwerkzeug derart ausgebildet ist, dass es in die entsprechenden Vorrichtungen kraft- und/oder formschlüssig eingreift.

Für diese Kombination ist es ferner von Vorteil, wenn das Abziehwerkzeug einen radial nach innen weisenden Vorsprung aufweist, der in die Nut eingreift.

Eine alternative Ausführungsform sieht vor, dass das Abziehwerkzeug und eine in einem Blech gehaltene Schraube, die in ein Gewindeloch axial kraftübertragend eingesetzt ist, verwendet wird.

Hierbei ist es möglich, dass mehrere Schrauben in über den Umfang (gleich-)verteilte Gewindelöcher eingreifen.

Ferner betrifft die Erfindung auch ein Verfahren zum Demontieren einer Trennkupplung in einem erfindungsgemäßen Hybridmodul, wobei das Abziehwerkzeug form- und/oder kraftschlüssig in Kontakt mit der Nabe gebracht und dann in einer Axialrichtung wirkende (Zug-) Kraft auf die Nabe aufgebracht wird und dabei die Nabe mit den darauf positionierten Teilen von der Zwischenwelle getrennt wird. Hierbei ist es von Vorteil, wenn vorab eine Zentral- bzw. Sicherungsschraube, die zur Sicherung der Nabe auf der Zwischenwelle gegen Axialverschiebung dient, entfernt wird.

Mit anderen Worten besteht die Erfindung darin, dass ein Aufbau vorgeschlagen wird, bei dem die KO-Kupplung des Hybridmoduls einzeln montiert und demontiert werden kann. Dadurch ist es möglich, die Kupplung im Reparaturfall auch einzeln austauschen zu können, ohne das komplette Hybridmodul mit E-Maschine und Leistungselektronik, Einrücksystem, Gehäuse etc. austauschen zu müssen. Dazu ist es bspw. auch notwendig, dass geeignete Abziehvorrichtungen bzw. -einrichtungen an der KO-Kupplung vorhanden sind. Dies kann bspw. dadurch gelöst sein, dass die vorhandene Nut des Sicherungsrings für das Abziehen der Kupplung benutzt wird. Eine andere Möglichkeit sind z.B. Gewindebohrungen in der Nabe, an denen ein Werkzeug zum Abziehen montiert werden kann. Die vorgeschlagenen Demontage-Ausführungen sind sowohl für achsparallele wie auch für koaxiale P2-Hybridsysteme anwendbar.

Man kann also auch sagen, dass gemäß der Erfindung eine Nut eines Sicherungsrings oder Gewindebohrungen in einer Nabe derart ausgelegt sind, dass sie die Verwendung eines Werkzeugs ermöglichen, um die Trennkupplung herunterzuziehen.

Die Erfindung wird nachfolgend mit Hilfe von Figuren näher erläutert, in denen unterschiedliche Ausführungsformen dargestellt sind. Es zeigen:
- Fig. 1: einen Längsschnitt eines erfindungsgemäßen Hybridmoduls;
- Fig. 2: den Längsschnitt aus Fig. 1 in perspektivischer Darstellung;
- Fig. 3: den Längsschnitt aus Fig. 1 zur Erläuterung von Wirkzusammenhängen in dem Hybridmodul;
- Fig. 4: Längsschnittansicht des Hybridmoduls im Bereich einer Kupplung bzw. einer Zwischenwelle;
- Fig. 5: eine Explosionsdarstellung der für die Erfindung wesentlichen Baugruppen des Hybridmoduls;
- Fig. 6: eine vergrößerte und vereinfachte Längsschnittansicht der für die Erfindung relevanten Baugruppen des Hybridmoduls;
- Fig. 7: eine perspektivische Darstellung einer Nabe des Hybridmoduls im Längsschnitt;
- Fig. 8: eine erste beispielhafte Ausführungsform zur Demontage der KO-Kupplung von der Zwischenwelle; und
- Fig. 9: eine zweite Ausführungsform zur Demontage der K0-Kupplung von der Zwischenwelle.

Die Figuren sind lediglich schematischer Natur und dienen nur dem Verständnis der Erfindung. Die gleichen Elemente sind mit denselben Bezugszeichen versehen.

Merkmale der einzelnen Ausführungsbeispiele können auch in anderen Ausführungsbeispielen realisiert werden. Sie sind also untereinander austauschbar.

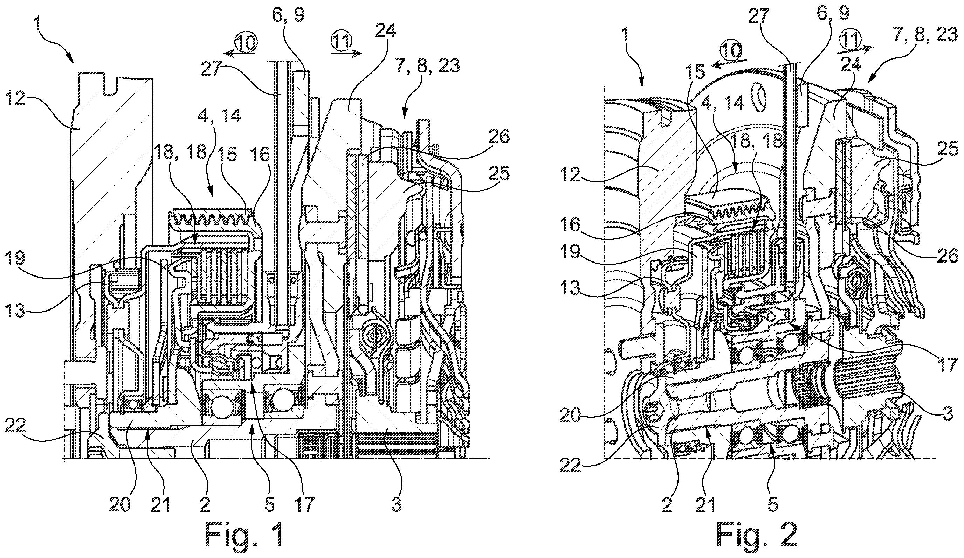

Die Fign. 1 und 2 zeigen einen Längsschnitt eines Hybridmoduls 1 als Schnittansicht (Fig. 1) bzw. in perspektivischer Ansicht (Fig. 2). Das Hybridmodul 1 weist eine Zwischenwelle 2 sowie eine davon separate Antriebswelle 3 auf. Die Antriebswelle 3 dient als Getriebeeingangswelle. Über eine Trennkupplung 4, welche auf der Zwischenwelle 2 montiert ist, ist es möglich, ein erstes Antriebsaggregat (nicht gezeigt) und/oder ein zweites Antriebsaggregat (nicht gezeigt) drehmomentübertragend mit der Zwischenwelle 2 zu verbinden. Die Zwischenwelle 2 ist über eine Stützlagerung 5 an einem Gehäuse 6 des Hybridmoduls 1 abgestützt. Mit der Antriebswelle 3 und der Zwischenwelle 2 ist ein Anfahrelement 7, ebenfalls in Form einer Kupplung 8, verbunden.

Das Gehäuse 6 weist eine Zwischenwand 9 auf, bzgl. welcher das Hybridmodul 1 in eine Motorseite 10 und eine Getriebeseite 11 aufgeteilt werden kann. Auf der Motorseite 10 befinden sich das erste Antriebsaggregat und das zweite Antriebsaggregat, welche hier nicht gezeigt sind. Als erstes Antriebsaggregat dient bspw. eine Verbrennungskraftmaschine, die über ein Zweimassenschwungrad, welches an einer Kurbelwelle (nicht gezeigt) der Verbrennungskraftmaschine angebracht ist, mit einem Außenlamellenträger 13, der als Lamellenkupplung 14 ausgebildeten Trennkupplung 4 verbunden ist.

Das zweite Antriebsaggregat ist bspw. in Form einer E-Maschine, wie einem E-Motor (nicht gezeigt), ausgebildet und über einen Riemen 15 mit einem Innenlamellenträger 16 mit der Trennkupplung 4 drehmomentübertragend verbunden. Die Trennkupplung 4 wird über eine Aus- / Einrückvorrichtung 17 betätigt. Die Lamellenpakete 18 (Reib- und Stahllamellen) werden über eine Tellerfeder 19 vorgespannt.

Die Trennkupplung 4 ist als eine gesamte Einheit auf einer Nabe 20 angeordnet, die über eine Welle-Nabe-Verbindung 21 mit der Zwischenwelle 2 drehmomentübertragend verbunden ist. Die Nabe 20 ist über eine Zentral- bzw. Sicherungsschraube 22 gegen Axialverschiebung gesichert.

Auf der Getriebeseite 11 befindet sich das Anfahrelement 7, in der gezeigten Ausführungsform, welches als eine Einfachkupplung 23 ausgebildet ist. Die Einfachkupplung 23 ist über ein Schwungrad 24, welches hier zweiteilig ausgeführt ist, mit der Zwischenwelle 2 verbunden. Über eine Kupplungsscheibe 25 und einem Reibelement 26 ist die Einfachkupplung 23 mit der Antriebswelle 3 drehmomentübertragend verbunden.

Die Trennkupplung 4 kann auch als KO-Kupplung und die Kupplung 8 kann auch als K1-Kupplung bezeichnet werden. Zur Betätigung der Aus- / Einrückvorrichtung 17 der Trennkupplung 4 weist das Gehäuse 6 eine Leitung 27 auf, über die bspw. ein Hydraulikmittel zugeführt werden kann.

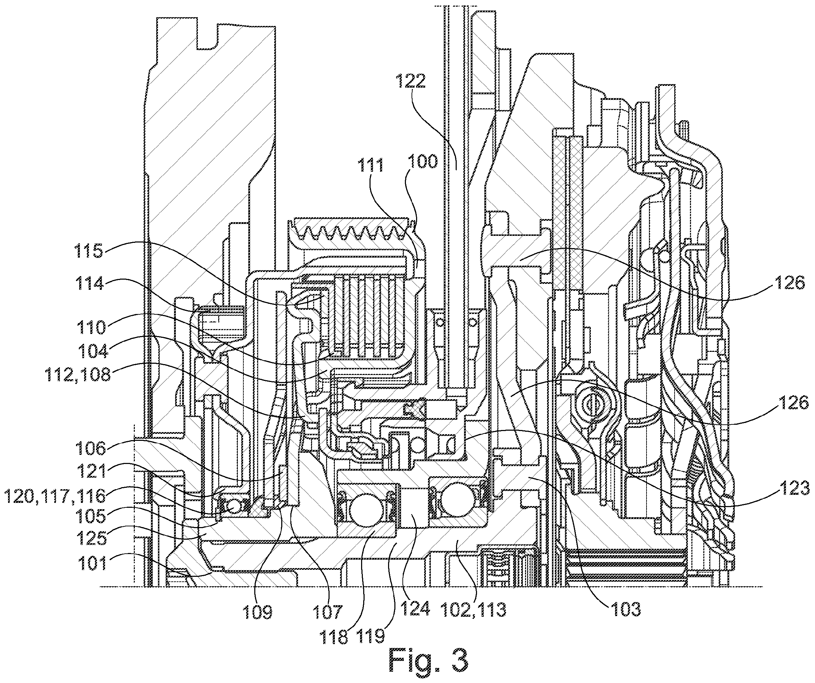

Fig. 3 zeigt die identische Ansicht zur Fig. 1, wobei hier ein Augenmerk auf Wirkungszusammenhänge gelegt ist. Hierbei bezeichnet das Bezugszeichen 100, dass eine Riemenscheibe und ein Lamellenträger einteilig oder mehrteilig ausgeführt sind.

Das Bezugszeichen 101 bezeichnet, dass eine axiale Sicherung und Kraftabstützung einer Trennkupplung über eine Verschraubung zu einer Zwischenwelle ausgeführt ist.

Das Bezugszeichen 102 bezeichnet eine Zwischenwelle als Abstützung (radial und axial) für einen Kupplungsdeckel, eine Doppelkupplung, einen Wandler etc.

Das Bezugszeichen 103 bezeichnet eine Verschraubung, Vernietung oder Verschweißung etc. eines Schwungrads und z.B. eines Kupplungsdeckels, einer Doppelkupplung oder eines Wandlers etc. an der Zwischenwelle.

Das Bezugszeichen 104 bezeichnet einen Innenlamellenträger, der als ein Verschleißanschlag für einen Drucktopf dient.

Das Bezugszeichen 105 bezeichnet, dass ein Abziehen der Trennkupplung von der Zwischenwelle über eine Nutzung einer Nut für einen Sicherungsring (oder einer separaten Nut) und eines Gewindes der Zwischenwelle möglich ist.

Das Bezugszeichen 106 bezeichnet, dass eine Vernietung des Lamellenträgers mit einer Nabe gleichzeitig zur Zentrierung einer Tellerfeder genutzt wird.

Das Bezugszeichen 107 bezeichnet, dass der Lamellenträger über einen separaten Zentrierdurchmesser mit der Nabe verbunden ist.

Das Bezugszeichen 108 bezeichnet, dass ein Innenlamellenträger auch als ein Anschlag für ein Einrücksystem dient.

Das Bezugszeichen 109 bezeichnet, dass ein Toleranzausgleich einer Tellerfederkraft durch Shimmen mit unterschiedlichen Höhen eines Abstützringes erfolgt.

Das Bezugszeichen 110 bezeichnet, dass eine axiale Bauraumersparnis durch abgeknickte Füße (Verzahnung) einer Anpressplatte erzielt wird.

Das Bezugszeichen 111 bezeichnet, dass der Innenlamellenträger zusätzliche Löcher für Stifte aufweist, um Reiblamellen bei der Montage zu positionieren.

Das Bezugszeichen 112 bezeichnet, dass der Innenlamellenträger als Zentrierung für den Drucktopf dient.

Das Bezugszeichen 113 bezeichnet, dass im Falle einer Doppelkupplung als eine Anfahrkupplung ein Stützlager der Trennkupplung auch die Lagerung der Doppelkupplung übernimmt. Es gibt eine feste Verbindung der Doppelkupplung mit einer Innenwelle der Trennkupplung. Es ist kein Doppelkupplungslager (auf einer Getriebewelle) vorgesehen.

Das Bezugszeichen 114 bezeichnet, dass keine Verspanneinrichtung von einem Zweimassenschwungrad und einer Trennkupplung vorgesehen ist. Verzahnungsgeräusche treten nur bei Leerlauf auf. Ein Leerlauf der Brennkraftmaschine ist keine vorgesehene Betriebsart. Mit der E-Maschine kann stets ein Moment auf einer Verzahnung liegen.

Das Bezugszeichen 115 bezeichnet, dass eine Anpressplatte als eine Zentrierung für eine Modulationsfeder dient.

Das Bezugszeichen 116 bezeichnet, dass eine Nabe als ein Träger für ein Lager für einen Außenlamellenträger dient.

Das Bezugszeichen 117 bezeichnet, dass ein Innenring des Lagers des Außenlamellenträgers in die Nabe integriert ist.

Das Bezugszeichen 118 bezeichnet, dass ein Innenring des Lagers, z.B. eines Rillenkugellagers, der Zwischenwelle in die Nabe integriert ist.

Das Bezugszeichen 119 bezeichnet, dass die Nabe als ein Träger für ein Stützlager dient.

Das Bezugszeichen 120 bezeichnet, dass das Lager für den Außenlamellenträger separat auf einer Zwischenwelle und nicht auf der Nabe gelagert ist.

Das Bezugszeichen 121 bezeichnet, dass der Außenlamellenträger als ein Außenring für Lager, z.B. ein Blechlager, dient.

Das Bezugszeichen 122 bezeichnet, dass eine Leitung für einen Zentralausrücker bzw. CSC bzw. Concentric Slave Cylinder in einer Blech- oder Materialdicke einer Zwischenwand verschwindet.

Das Bezugszeichen 123 bezeichnet, dass der Zentralausrücker mit einem Flansch und einer Lagerträgereinheit an die Zwischenwand geschraubt, genietet oder verschweißt ist. Der Zentralausrücker ist nur aufgesteckt und nicht verschraubt.

Das Bezugszeichen 124 bezeichnet, dass ein Bauraum zwischen Lagern der Zwischenwelle und der Zwischenwand zum Messen von Drehmoment, Temperatur, Drehzahl, Position (Resolver) usw., bzw. für Einrichtungen zum Messen von Werten dieser Größen verwendet wird.

Das Bezugszeichen 125 bezeichnet, dass eine Demontage der Trennkupplung ohne eine Demontage des Hybridmoduls möglich ist. Alternativ können die Trennkupplung und die Anfahrkupplung eine Liefereinheit inklusive der Zwischenwand und des Rotors der E-Maschine sein. Ebenso kann ein Komplettmodul mit Gehäuse, Stator, Kühlung, Elektronik, Aktorik, usw. vorgesehen sein.

Das Bezugszeichen 126 bezeichnet, dass ein Schwungrad für die Anfahrkupplung zweiteilig ausgeführt ist, um einen axialen Bauraum zu sparen. Eine Vernietung von Guss mit Blech ist außerhalb, innerhalb oder unterhalb einer Reibfläche möglich.

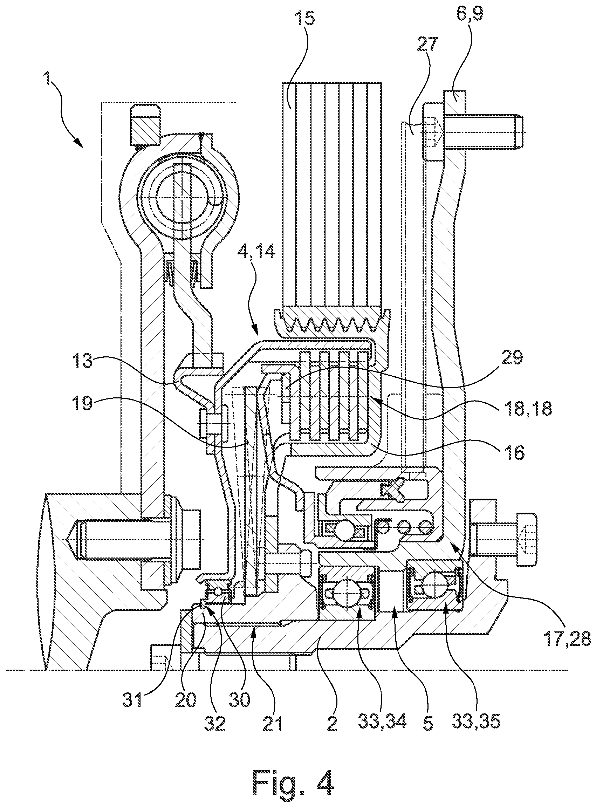

Fig. 4 zeigt einen Ausschnitt des Hybridmoduls 1 im Bereich der Zwischenwelle 2 als Längsschnittansicht. Die Trennkupplung 4, welche auch als KO-Kupplung bezeichnet werden kann, ist in der hier gezeigten Ausführungsform eine "normally-closed"-Kupplung mit einem CSC (Concentric Slave Cylinder) bzw. einem Nehmerzylinder 28 als eine Aus- / Einrückvorrichtung 17. Die Trennkupplung 4, die als Lamellenkupplung 14 ausgebildet ist, kann als eine Trockenkupplung oder eine Nasskupplung ausgeführt sein. Der Innenlamellenträger 16 dient, wie vorstehend bereits erwähnt, als Riemenscheibenträger für den Riemen 15. Alternativ, insbesondere für ein koaxiales Hybridsystem (nicht gezeigt) kann der Innenlamellenträger 16 auch als Rotorträger der E-Maschine dienen. Darüber hinaus kann eine Modulationsfeder 29 vorgesehen sein. Der Außenlamellenträger 13 ist über ein Lager 30 auf der Nabe 20 gelagert. Das Lager 30 ist über einen Sicherungsring 31, der in einer entsprechenden Nut 32 in der Nabe 20 eingesetzt ist, gegen Axialverschiebung gesichert. Die Zwischenwelle 2 wird über die Stützlagerung 5 an dem Gehäuse 6, genauer an der Zwischenwand 9 abgestützt. Die Stützlagerung 5 weist in der hier gezeigten Ausführungsform zwei Lager 33 auf, wovon eins als Rillenkugellager 34 und das zweite als ein Schrägkugellager 35 ausgebildet ist.

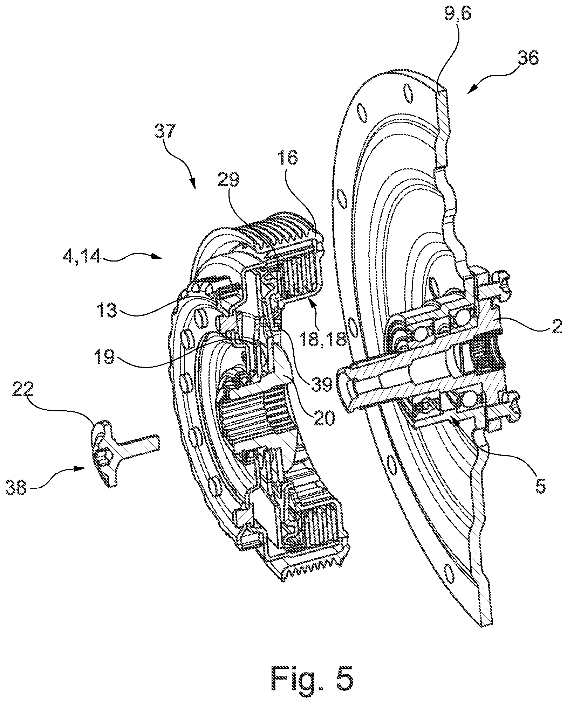

Fig. 5 zeigt die für die Erfindung relevanten Baugruppen des Hybridmoduls 1 in einer Explosionsdarstellung. Hierbei umfasst eine Baugruppe 36 die Zwischenwelle 2, welche über die Stützlagerung 5 an der Zwischenwand 9 des Gehäuses 6 abgestützt ist. Eine Baugruppe 37 umfasst hierbei die als die Lamellenkupplung 14 ausgebildete Trennkupplung 4, die auf der Nabe 20 angeordnet ist. Eine Baugruppe 38 weist die Sicherungsschraube 22 auf.

Die Lamellenkupplung 14 weist, wie vorstehend bereits ausgeführt, den Innenlamellenträger 16, den Außenlamellenträger 13, die Tellerfeder 19, zwei Lamellenpakete 18, 18 sowie einen Drucktopf 39 und die Modulationsfeder 29 auf. Anhand von Fig. 5 ist sehr gut zu erkennen, dass vorab die Sicherungsschraube 22 entfernt werden muss, damit die Nabe 20 mit der darauf montierten Trennkupplung 4 von der Zwischenwelle 2 abgezogen werden kann.

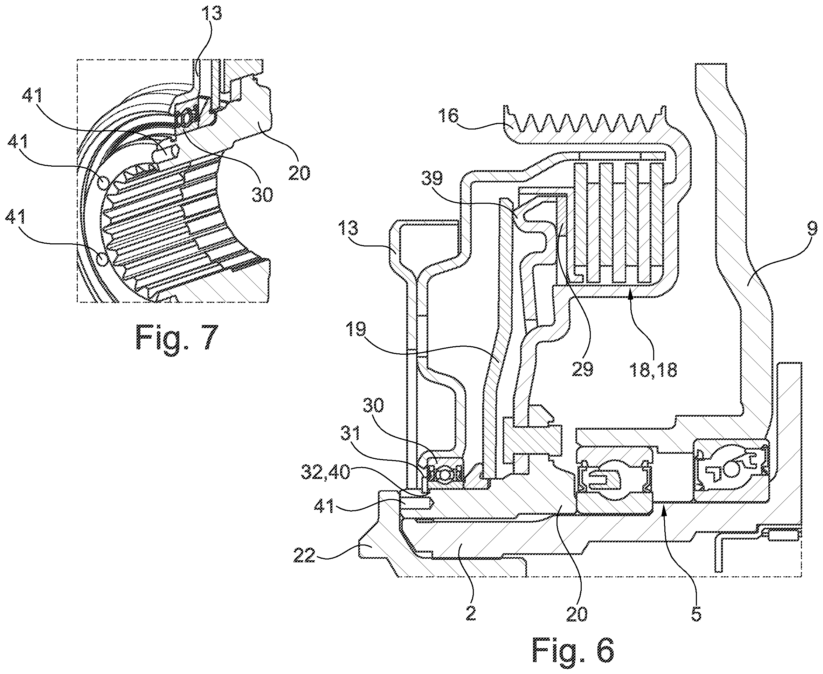

Die Fign. 6 und 7 zeigen Vorrichtungen bzw. Einrichtungen 40, die an der Nabe 20 vorgesehen sind, um die Nabe 20 zusammen mit der darauf angeordneten Kupplung 4 bzw. 14 von der Zwischenwelle 2 demontieren bzw. abziehen zu können. Eine erste Möglichkeit für eine solche Vorrichtung 40 ist die Nut 32 für den Sicherungsring 31. Eine zweite Möglichkeit für die Vorrichtungen 40 sind axiale Gewindelöcher 41 (siehe auch Fig. 7), die von der in Axialrichtung betrachteten einen Seite in die Nabe 20 eingebracht sind.

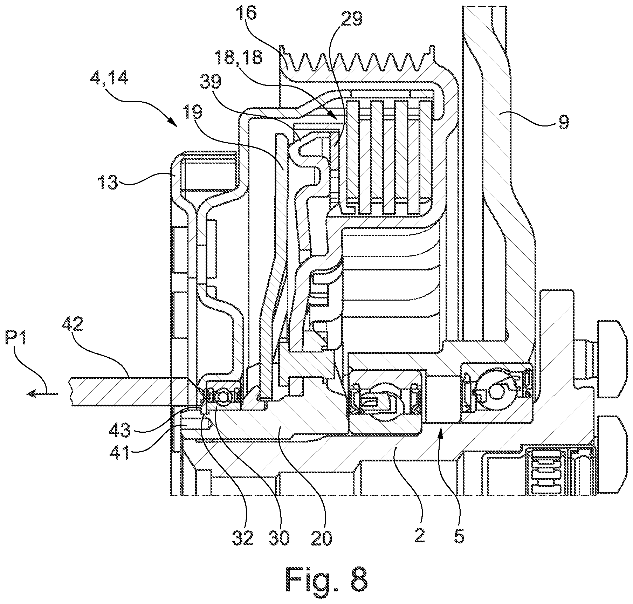

Fig. 8 zeigt eine erste Ausführungsform eines Abziehwerkzeugs 42, welches dazu vorbereitet ist, in die Nut 32 des Sicherungsrings 31 (siehe Fig. 6) mit einem sich radial nach innen erstreckenden Vorsprung 43 einzugreifen. Der radiale Vorsprung 43 greift somit formschlüssig in die Nut 32 ein und durch eine Bewegung des Abziehwerkzeugs 42 entlang der Richtung eines Pfeils P1 kann (nachdem die Zentralschraube 22 entfernt wurde) die Kupplung 4 bzw. 14 zusammen mit der Nabe 20 von der Zwischenwelle 2 demontiert werden.

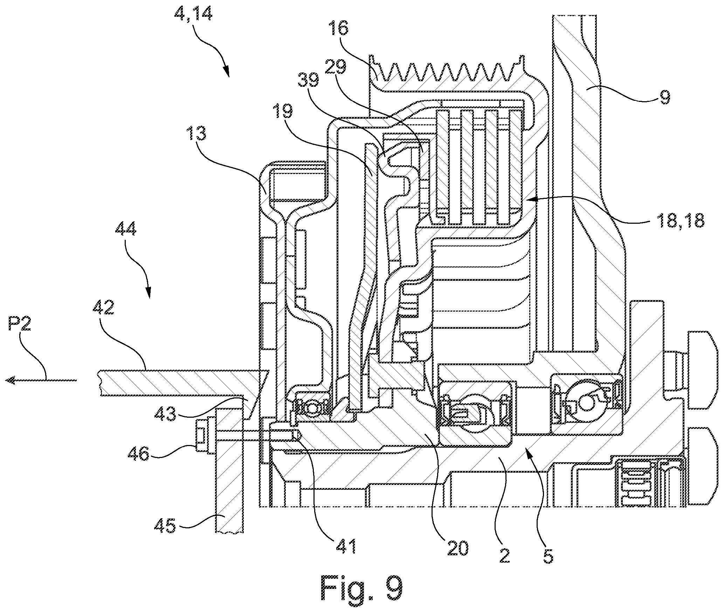

Fig. 9 zeigt eine zweite mögliche Ausführungsform des Abziehwerkzeugs 42, wobei dieses hier eher als ein Abziehsystem 44 bezeichnet werden kann, da es aus dem Abziehwerkzeug 42, einem Abziehblech 45 sowie einer Schraube 46 ausgebildet ist. Zum Demontieren der Nabe 20 mit der darauf angeordneten Trennkupplung 4 bzw. Lamellenkupplung 14 wird die Schraube 46 durch das Abziehblech 45 geführt und in das entsprechende Gewindeloch 41 in der Nabe 20 eingeschraubt. Das Abziehwerkzeug 42 weist auch hier einen sich radial nach innen erstreckenden Vorsprung 43 auf, der so ausgebildet ist, dass er das Abziehblech 45 in radialer Richtung hintergreifen kann, sodass bei Bewegung des Abziehwerkzeugs 42 entlang der Richtung eines Pfeils P2 die Nabe 20 zusammen mit der Trennkupplung 4 von der Zwischenwelle 2 demontiert werden kann.

### Bezugszeichenliste

- 1: Hybridmodul
- 2: Zwischenwelle
- 3: Antriebswelle
- 4: Trennkupplung
- 5: Stützlagerung
- 6: Gehäuse
- 7: Anfahrelement
- 8: Kupplung
- 9: Zwischenwand
- 10: Motorseite
- 11: Getriebeseite
- 12: Zweimassenschwungrad
- 13: Außenlamellenträger
- 14: Lamellenkupplung
- 15: Riemen
- 16: Innenlamellenträger
- 17: Aus- / Einrückvorrichtung
- 18: Lamellenpaket
- 19: Tellerfeder
- 20: Nabe
- 21: Welle-Nabe-Verbindung
- 22: Zentral- / Sicherungsschraube
- 23: Einfachkupplung
- 24: Schwungrad
- 25: Kupplungsscheibe
- 26: Reibelement
- 27: Leitung
- 28: Nehmerzylinder (CSC)
- 29: Modulationsfeder
- 30: Lager
- 31: Sicherungsring
- 32: Nut
- 33: Lager
- 34: Rillenkugellager
- 35: Schrägkugellager
- 36: Baugruppe
- 37: Baugruppe
- 38: Baugruppe
- 39: Drucktopf
- 40: Vor- / Einrichtung
- 41: Gewindeloch
- 42: Abziehwerkzeug
- 43: radialer Vorsprung
- 44: Abziehsystem
- 45: Abziehblech
- 46: Schraube

- P1: Pfeil
- P2: Pfeil

- 101: Verschraubung
- 102: Zwischenwelle
- 103: Verschraubung/Vernietung/Verschweißung
- 104: Innenlamellenträger
- 105: Nut
- 106: Vernietung
- 107: Zentrierdurchmesser
- 108: Anschlag
- 109: Abstützring
- 110: Verzahnung
- 111: Loch
- 112: Drucktopfzentrierung
- 113: Stützlager
- 114: Verzahnung
- 115: Anpressplatte
- 116: Nabe
- 117: Innenring
- 118: Innenring
- 119: Nabe
- 120: Lager
- 121: Außenring
- 122: Zwischenwand
- 123: Zentralausrücker
- 124: Bauraum

## Patentansprüche

1. Hybridmodul (1), mit einem ersten Antriebsaggregat, einem zweiten Antriebsaggregat, die über eine Zwischenwelle (2) mit einer Antriebswelle (3) drehmomentübertragend verbindbar sind, wobei ein Drehmoment von dem ersten Antriebsaggregat und/oder dem zweiten Antriebsaggregat über eine Trennkupplung (4) an die Zwischenwelle (2) weitergebbar ist, wobei die Zwischenwelle (2) über eine Stützlagerung (5) an einem Gehäuse (6) abgestützt ist, und die Trennkupplung (4) über eine Nabe (20) mit der Zwischenwelle (2) verbunden ist, wobei die Nabe (20) zumindest eine Vorrichtung (40) aufweist, an der ein Abziehwerkzeug (42) zum Kraftaufbringen form- und/oder kraftschlüssig angreifen kann, um beim Einsatz des Abziehwerkzeugs (42) eine Demontage der Nabe (20) und der Trennkupplung (4) zu ermöglichen, **dadurch gekennzeichnet, dass** die Trennkupplung (4) als eine Lamellenkupplung (14) mit einem Außenlamellenträger (13) und einem Innenlamellenträger (16) ausgebildet ist und der Innenlamellenträger (16) in Kontakt mit einem Endloszugmittel (15) ist.

2. Hybridmodul (1) gemäß Anspruch 1, **dadurch gekennzeichnet, dass** die Vorrichtung (40) als eine Nut (32) oder als Gewindelöcher (41) ausgebildet ist.

3. Abziehwerkzeug-Hybridmodul-Kombination, aus dem Hybridmodul (1) nach einem der vorhergehenden Ansprüche und einem Abziehwerkzeug (42), wobei das Abziehwerkzeug (42) derart ausgebildet ist, dass es in die entsprechenden Vorrichtungen (40) kraft- und/oder formschlüssig eingreift.

4. Abziehwerkzeug-Hybridmodul-Kombination gemäß Anspruch 3, **dadurch gekennzeichnet, dass** das Abziehwerkzeug (42) einen radial nach innen weisenden Vorsprung (43) aufweist, der in die Nut (32) eingreift.

5. Abziehwerkzeug-Hybridmodul-Kombination gemäß Anspruch 3, **dadurch gekennzeichnet, dass** das Abziehwerkzeug (42) und eine in einem Blech (45) gehaltene Schraube (46), die in ein Gewindeloch (41) kraftübertragend eingreift, eingesetzt sind.

6. Abziehwerkzeug-Hybridmodul-Kombination gemäß Anspruch 5, **dadurch gekennzeichnet, dass** mehrere Schrauben (46) in über den Umfang verteilte Gewindelöcher (41) eingreifen.

7. Verfahren zum Demontieren einer Trennkupplung (4) in einem Hybridmodul (1) nach einem der Ansprüche 1 oder 2, wobei ein Abziehwerkzeug (42) form- und/oder kraftschlüssig in Kontakt mit der Nabe (20) gebracht, und dann in eine Axialrichtung wirkende Kraft auf die Nabe (20) aufgebracht wird und dabei die Nabe (20) mit den darauf positionierten Teilen von der Zwischenwelle (2) getrennt wird.

8. Verfahren zum Demontieren einer Trennkupplung (4) gemäß Anspruch 7, **dadurch gekennzeichnet, dass** vorab eine Zentralschraube (22), die zur Sicherung der Nabe (20) auf der Zwischenwelle (2) gegen Axialverschiebung dient, entfernt wird.

## Claims

1. A hybrid module (1), having a first drive unit and a second drive unit, which can be connected to a drive shaft (3) in a torque-transmitting manner via an intermediate shaft (2), wherein a torque can be transmitted from the first drive unit and/or the second drive unit to the intermediate shaft (2) via a separating clutch (4), wherein the intermediate shaft (2) is supported on a housing (6) via a support bearing (5), and the separating clutch (4) is connected to the intermediate shaft (2) via a hub (20), wherein the hub (20) has at least one device (40) on which a removal tool (42) for applying force can engage interlockingly and/or frictionally in order to enable the disassembly of the hub (20) and the separating clutch (4) by using the removal tool (42), **characterised in that** the separating clutch (4) is designed as a multi-plate clutch (14) having an outer plate carrier (13) and an inner plate carrier (16) and the inner plate carrier (16) is in contact with a continuous traction means (15).

2. The hybrid module (1) according to claim 1, **characterised in that** the device (40) is designed as a groove (32) or as threaded holes (41).

3. A removal tool-hybrid module combination, comprising the hybrid module (1) according to any one of the preceding claims and a removal tool (42), wherein the removal tool (42) is designed such that it engages interlockingly and/or frictionally in the corresponding devices (40).

4. The removal tool-hybrid module combination according to claim 3, **characterised in that** the removal tool (42) has a radially inwardly facing projection (43) which engages in the groove (32).

5. The removal tool-hybrid module combination according to claim 3, **characterised in that** the removal tool (42) and a screw (46) held in a metal sheet (45), which screw engages in a threaded hole (41) in a force-transmitting manner, are used.

6. The removal tool-hybrid module combination according to claim 5, **characterised in that** a plurality of screws (46) engage in threaded holes (41) distributed over the circumference.

7. A method for disassembling a separating clutch (4) in a hybrid module (1) according to any one of claims 1 or 2, wherein a removal tool (42) is brought interlockingly and/or frictionally into contact with the hub (20), and force acting in an axial direction is then applied to the hub (20), and the hub (20) with the parts positioned thereon is thereby separated from the intermediate shaft (2).

8. The method for disassembling a separating clutch (4) according to claim 7, **characterised in that** a central screw (22) which serves to secure the hub (20) on the intermediate shaft (2) against axial displacement is removed beforehand.

## Revendications

1. Module hybride (1), comprenant un premier groupe motopropulseur, un second groupe motopropulseur, lesquels, au moyen d'un arbre intermédiaire (2), peuvent être raccordés à un arbre d'entraînement (3) de manière à transmettre le couple, dans lequel un couple peut être retransmis du premier groupe motopropulseur et/ou du second groupe motopropulseur au moyen d'un embrayage de séparation (4) à l'arbre intermédiaire (2), dans lequel l'arbre intermédiaire (2), au moyen d'un palier d'appui (5), est en appui sur un carter (6) et l'embrayage de séparation (4), au moyen d'un moyeu (20), est raccordé à l'arbre intermédiaire (2), dans lequel le moyeu (20) comporte au moins un dispositif (40) sur lequel un outil d'extraction (42) vient en prise par liaison de complémentarité de forme et/ou de force pour l'application de force, afin de permettre, lors de l'insertion de l'outil d'extraction (42), le démontage du moyeu (20) et de l'embrayage de séparation (4), **caractérisé en ce que** l'embrayage de séparation (4) est conçu sous la forme d'un embrayage multidisques (14) comportant un support de disque externe (13) et un support de disque interne (16) et le support de disque interne (16) est en contact avec un moyen de traction sans fin (15).

2. Module hybride (1) selon la revendication 1, **caractérisé en ce que** le dispositif (40) est conçu sous la forme d'une rainure (32) ou des trous filetés (41).

3. Combinaison outil d'extraction-module hybride, comprenant le module hybride (1) selon l'une quelconque des revendications précédentes et un outil d'extraction (42), dans laquelle l'outil d'extraction (42) est conçu de manière à venir en prise dans les dispositifs (40) correspondants par liaison de complémentarité de forme et/ou de force.

4. Combinaison outil d'extraction-module hybride selon la revendication 3, **caractérisée en ce que** l'outil d'extraction (42) comporte une saillie (43) dirigée radialement vers l'intérieur, laquelle vient en prise dans la rainure (32).

5. Combinaison outil d'extraction-module hybride selon la revendication 3, **caractérisée en ce que** l'outil d'extraction (42) et une vis (46) maintenue dans une tôle (45), laquelle vient en prise dans un trou fileté (41) de manière à transmettre la force, sont introduits.

6. Combinaison outil d'extraction-module hybride selon la revendication 5, **caractérisée en ce que** plusieurs vis (46) viennent en prise dans des trous filetés (41) répartis sur la circonférence.

7. Procédé de démontage d'un embrayage de séparation (4) dans un module hybride (1) selon l'une quelconque des revendications 1 ou 2, dans lequel un outil d'extraction (42) est mis en contact avec le moyeu (20) par liaison de complémentarité de forme et/ou de force, puis une force agissant dans une direction axiale est appliquée au moyeu (20) et le moyeu (20), avec les pièces positionnées sur celui-ci, est ainsi séparé de l'arbre intermédiaire (2).

8. Procédé de démontage d'un embrayage de séparation (4) selon la revendication 7, **caractérisé en ce qu'**une vis centrale (22), laquelle sert à fixer le moyeu (20) sur l'arbre intermédiaire (2) contre tout déplacement axial, est préalablement retirée.
